# EUROPEAN PATENT APPLICATION

(11) **EP 4 443 762 A2**
(43) Date of publication of application: **09.10.2024**
(21) Application number: 24161740.6
(22) Date of filing: 06.03.2024
(51) Int. Cl.: H04B 7/06, H04B 7/08, H04L 5/00, H04W 64/00

(54) **SOUNDING REFERENCE SIGNAL RESOURCE SET BASED ON BEAM DIRECTIVITY CONSTRAINT**

(30) Priority: 03.04.2023 FI 20235375
(71) Applicant: Nokia Technologies Oy, 02610 Espoo (FI)
(72) Inventor: KUMAR, Dileep, Espoo (FI); JOSHI, Satya Krishna, Oulu (FI); SÄILY, Mikko, Laukkoski (FI)
(74) Representative: Nokia EPO representatives

(57) **Abstract**

Disclosed is a method comprising obtaining measurement information comprising radio environment measurements associated with a user device; obtaining capability information associated with the user device; determining, based at least on the measurement information, the capability information and a beam directivity constraint, one or more sounding reference signal resource sets for the user device; and transmitting, to the user device, a message indicative of at least a subset of the one or more sounding reference signal resource sets.

## Description

### FIELD

The following example embodiments relate to wireless communication and to use of reference signals.

### BACKGROUND

Use of reference signals is pertinent to wireless communications. Reference signals enable efficient channel estimation for detection and decoding, as an example. They are also pertinent in other use cases, such as in positioning. For positioning a user device, the user device may transmit reference signals that may be measured by network nodes. However, when transmitting signals such as reference signals, a transmitter, such as a user device may be required to comply with various constraints related to radiated power. For example, it may be necessary to comply with a maximum permissible exposure limit, which indicates the level of radio frequency energy exposure that is considered to be safe for human exposure. There is a challenge in how to enable the user device to comply constraints like the maximum permissible exposure limit, while still enabling efficient use of reference signals.

### BRIEF DESCRIPTION

The scope of protection sought for various example embodiments is set out by the independent claims. The example embodiments and features, if any, described in this specification that do not fall under the scope of the independent claims are to be interpreted as examples useful for understanding various embodiments.

According to an aspect, there is provided an apparatus comprising at least one processor, and at least one memory storing instructions that, when executed by the at least one processor, cause the apparatus at least to: obtain measurement information comprising radio environment measurements associated with a user device; obtain capability information associated with the user device; determine, based at least on the measurement information, the capability information and a beam directivity constraint, one or more sounding reference signal resource sets for the user device; and transmit, to the user device, a message indicative of at least a subset of the one or more sounding reference signal resource sets.

According to another aspect, there is provided an apparatus comprising: means for obtaining measurement information comprising radio environment measurements associated with a user device; means for obtaining capability information associated with the user device; means for determining, based at least on the measurement information, the capability information and a beam directivity constraint, one or more sounding reference signal resource sets for the user device; and means for transmitting, to the user device, a message indicative of at least a subset of the one or more sounding reference signal resource sets.

According to another aspect, there is provided a method comprising: obtaining measurement information comprising radio environment measurements associated with a user device; obtaining capability information associated with the user device; determining, based at least on the measurement information, the capability information and a beam directivity constraint, one or more sounding reference signal resource sets for the user device; and transmitting, to the user device, a message indicative of at least a subset of the one or more sounding reference signal resource sets.

According to another aspect, there is provided a computer program comprising instructions which, when executed by an apparatus, cause the apparatus to perform at least the following: obtaining measurement information comprising radio environment measurements associated with a user device; obtaining capability information associated with the user device; determining, based at least on the measurement information, the capability information and a beam directivity constraint, one or more sounding reference signal resource sets for the user device; and transmitting, to the user device, a message indicative of at least a subset of the one or more sounding reference signal resource sets.

According to another aspect, there is provided a computer readable medium comprising program instructions which, when executed by an apparatus, cause the apparatus to perform at least the following: obtaining measurement information comprising radio environment measurements associated with a user device; obtaining capability information associated with the user device; determining, based at least on the measurement information, the capability information and a beam directivity constraint, one or more sounding reference signal resource sets for the user device; and transmitting, to the user device, a message indicative of at least a subset of the one or more sounding reference signal resource sets.

According to another aspect, there is provided a non-transitory computer readable medium comprising program instructions which, when executed by an apparatus, cause the apparatus to perform at least the following: obtaining measurement information comprising radio environment measurements associated with a user device; obtaining capability information associated with the user device; determining, based at least on the measurement information, the capability information and a beam directivity constraint, one or more sounding reference signal resource sets for the user device; and transmitting, to the user device, a message indicative of at least a subset of the one or more sounding reference signal resource sets.

According to another aspect, there is provided an apparatus comprising at least one processor, and at least one memory storing instructions that, when executed by the at least one processor, cause the apparatus at least to: receive, from a network node, a message indicative of one or more sounding reference signal resource sets, wherein the one or more sounding reference signal resource sets are based at least on measurement information associated with the apparatus, capability information associated with the apparatus, and a beam directivity constraint, the measurement information comprising radio environment measurements associated with the apparatus; select a sounding reference signal resource set from the one or more sounding reference signal resource sets such that the beam directivity constraint is satisfied with the selected sounding reference signal resource set; and transmit, to the network node, one or more sounding reference signals based on the selected sounding reference signal resource set.

According to another aspect, there is provided an apparatus comprising: means for receiving, from a network node, a message indicative of one or more sounding reference signal resource sets, wherein the one or more sounding reference signal resource sets are based at least on measurement information associated with the apparatus, capability information associated with the apparatus, and a beam directivity constraint, the measurement information comprising radio environment measurements associated with the apparatus; means for selecting a sounding reference signal resource set from the one or more sounding reference signal resource sets such that the beam directivity constraint is satisfied with the selected sounding reference signal resource set; and means for transmitting, to the network node, one or more sounding reference signals based on the selected sounding reference signal resource set.

According to another aspect, there is provided a method comprising: receiving, by an apparatus, from a network node, a message indicative of one or more sounding reference signal resource sets, wherein the one or more sounding reference signal resource sets are based at least on measurement information associated with the apparatus, capability information associated with the apparatus, and a beam directivity constraint, the measurement information comprising radio environment measurements associated with the apparatus; selecting, by the apparatus, a sounding reference signal resource set from the one or more sounding reference signal resource sets such that the beam directivity constraint is satisfied with the selected sounding reference signal resource set; and transmitting, by the apparatus, to the network node, one or more sounding reference signals based on the selected sounding reference signal resource set.

According to another aspect, there is provided a computer program comprising instructions which, when executed by an apparatus, cause the apparatus to perform at least the following: receiving, from a network node, a message indicative of one or more sounding reference signal resource sets, wherein the one or more sounding reference signal resource sets are based at least on measurement information associated with the apparatus, capability information associated with the apparatus, and a beam directivity constraint, the measurement information comprising radio environment measurements associated with the apparatus; selecting a sounding reference signal resource set from the one or more sounding reference signal resource sets such that the beam directivity constraint is satisfied with the selected sounding reference signal resource set; and transmitting, to the network node, one or more sounding reference signals based on the selected sounding reference signal resource set.

According to another aspect, there is provided a computer readable medium comprising program instructions which, when executed by an apparatus, cause the apparatus to perform at least the following: receiving, from a network node, a message indicative of one or more sounding reference signal resource sets, wherein the one or more sounding reference signal resource sets are based at least on measurement information associated with the apparatus, capability information associated with the apparatus, and a beam directivity constraint, the measurement information comprising radio environment measurements associated with the apparatus; selecting a sounding reference signal resource set from the one or more sounding reference signal resource sets such that the beam directivity constraint is satisfied with the selected sounding reference signal resource set; and transmitting, to the network node, one or more sounding reference signals based on the selected sounding reference signal resource set.

According to another aspect, there is provided a non-transitory computer readable medium comprising program instructions which, when executed by an apparatus, cause the apparatus to perform at least the following: receiving, from a network node, a message indicative of one or more sounding reference signal resource sets, wherein the one or more sounding reference signal resource sets are based at least on measurement information associated with the apparatus, capability information associated with the apparatus, and a beam directivity constraint, the measurement information comprising radio environment measurements associated with the apparatus; selecting a sounding reference signal resource set from the one or more sounding reference signal resource sets such that the beam directivity constraint is satisfied with the selected sounding reference signal resource set; and transmitting, to the network node, one or more sounding reference signals based on the selected sounding reference signal resource set.

### LIST OF DRAWINGS

In the following, various example embodiments will be described in greater detail with reference to the accompanying drawings, in which
FIG. 1 illustrates an example of a wireless communication network;
FIG. 2A illustrates a wireless communication scenario;
FIG. 2B illustrates an example of positioning accuracy degradation caused by a non-line-of-sight path;
FIG. 3 illustrates a signal flow diagram;
FIG. 4 illustrates a flow chart;
FIG. 5 illustrates a flow chart;
FIG. 6 illustrates a comparison of beamforming sequences;
FIG. 7 illustrates an example of a power-delay profile of multipaths with weak line of sight;
FIG. 8 illustrates an example of an apparatus; and
FIG. 9 illustrates an example of an apparatus.

### DETAILED DESCRIPTION

The following embodiments are exemplifying. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments.

Some example embodiments described herein may be implemented in a wireless communication and positioning network comprising a radio access network based on one or more of the following radio access technologies: Global System for Mobile Communications (GSM) or any other second generation radio access technology, Universal Mobile Telecommunication System (UMTS, 3G) based on basic wideband-code division multiple access (W-CDMA), high-speed packet access (HSPA), Long Term Evolution (LTE), LTE-Advanced, fourth generation (4G), fifth generation (5G), 5G new radio (NR), 5G-Advanced (i.e., 3GPP NR Rel-18 and beyond), or sixth generation (6G). Some examples of radio access networks include the universal mobile telecommunications system (UMTS) radio access network (UTRAN), the Evolved Universal Terrestrial Radio Access network (E-UTRA), or the next generation radio access network (NG-RAN). The wireless communication network may further comprise a core network, and some example embodiments may also be applied to network functions of the core network.

It should be noted that the embodiments are not restricted to the wireless communication network given as an example, but a person skilled in the art may also apply the solution to other wireless communication networks or systems provided with necessary properties. For example, some example embodiments may also be applied to a communication system based on IEEE 802.11 specifications, or a communication system based on IEEE 802.15 specifications.

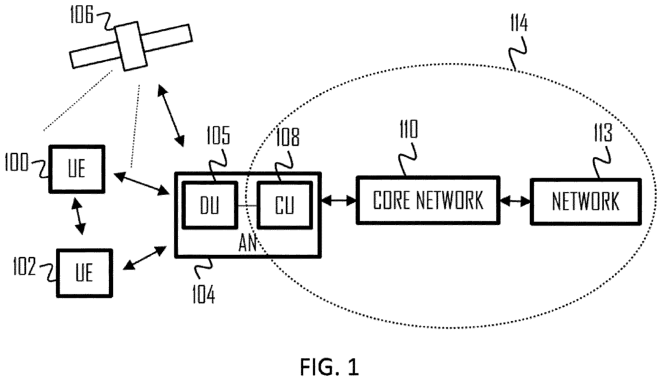

FIG. 1 depicts an example of a simplified wireless communication network showing some physical and logical entities. The connections shown in FIG. 1 may be physical connections or logical connections. It is apparent to a person skilled in the art that the wireless communication network may also comprise other physical and logical entities than those shown in FIG. 1.

The example embodiments described herein are not, however, restricted to the wireless communication network given as an example but a person skilled in the art may apply the embodiments described herein to other wireless communication networks provided with necessary properties.

The example wireless communication network shown in FIG. 1 includes an access network, such as a radio access network (RAN), and a core network 110.

FIG. 1 shows user equipment (UE) 100, 102 configured to be in a wireless connection on one or more communication channels in a radio cell with an access node (AN) 104 of an access network. The AN 104 may be an evolved Node B (abbreviated as eNB or eNodeB) or a next generation Node B (abbreviated as gNB or gNodeB), providing the radio cell. The wireless connection (e.g., radio link) from a UE to the access node 104 may be called uplink (UL) or reverse link, and the wireless connection (e.g., radio link) from the access node to the UE may be called downlink (DL) or forward link. UE 100 may also communicate directly with UE 102, and vice versa, via a wireless connection generally referred to as a sidelink (SL). It should be appreciated that the access node 104 or its functionalities may be implemented by using any node, host, server or access point etc. entity suitable for providing such functionalities.

The access network may comprise more than one access node, in which case the access nodes may also be configured to communicate with one another over links, wired or wireless. These links between access nodes may be used for sending and receiving control plane signaling and also for routing data from one access node to another access node.

The access node may comprise a computing device configured to control the radio resources of the access node. The access node may also be referred to as a base station, a base transceiver station (BTS), an access point, a cell site, a radio access node or any other type of node capable of being in a wireless connection with a UE (e.g., UEs 100, 102). The access node may include or be coupled to transceivers. From the transceivers of the access node, a connection may be provided to an antenna unit that establishes bi-directional radio links to UEs 100, 102. The antenna unit may comprise an antenna or antenna element, or a plurality of antennas or antenna elements.

The access node 104 may further be connected to a core network (CN) 110. The core network 110 may comprise an evolved packet core (EPC) network and/or a 5^{th} generation core network (5GC). The EPC may comprise network entities, such as a serving gateway (S-GW for routing and forwarding data packets), a packet data network gateway (P-GW) for providing connectivity of UEs to external packet data networks, and a mobility management entity (MME). The 5GC may comprise network functions, such as a user plane function (UPF), an access and mobility management function (AMF), and a location management function (LMF).

With respect to positioning, the core network 110 may comprise a 5GC having a service-based architecture. The 5GC may comprise various network functions, including an AMF and a location management function (LMF). The AMF may be configured to provide location information for call processing, mobility policy enforcement, and charging purposes to other network functions in the core network 110 and to other entities requesting for positioning of UEs. The AMF may receive and manage location requests from several entities: mobile-originated location requests (MO-LR) received from the UEs and mobile-terminated location requests (MT-LR) destined for other functions of the core network or the access network. The AMF may select the LMF for a given request and use its positioning service to trigger a positioning session. The LMF may then carry out the positioning upon receiving such a request from the AMF. The LMF may manage the resources and timing of positioning activities. The LMF may obtain location information for a UE with at least one of the following ways: by sending a Namf_Communication service request via the NL1 interface to one or more access nodes for network-based positioning; or by communicating with the UE over the N1 interface for UE-based or UE-assisted positioning. The location information obtained by the LMF may include an estimation of the location of the UE and, additionally, the LMF may also estimate movement or accuracy of the location information when requested. Connection-wise, the AMF may be between the access node and the LMF and, thus, closer to the access nodes than the LMF.

The core network 110 may also be able to communicate with one or more external networks 113, such as a public switched telephone network or the Internet, or utilize services provided by them. For example, in 5G wireless communication networks, the UPF of the core network 110 may be configured to communicate with an external data network via an N6 interface. In LTE wireless communication networks, the P-GW of the core network 110 may be configured to communicate with an external data network.

The illustrated UE 100, 102 is one type of an apparatus to which resources on the air interface may be allocated and assigned. The UE 100, 102 may also be called a wireless communication device, a subscriber unit, a mobile station, a remote terminal, an access terminal, a user terminal, a terminal device, or a user device just to mention but a few names. The UE may be a computing device operating with or without a subscriber identification module (SIM), including, but not limited to, the following types of computing devices: a mobile phone, a smartphone, a personal digital assistant (PDA), a handset, a computing device comprising a wireless modem (e.g., an alarm or measurement device, etc.), a laptop computer, a desktop computer, a tablet, a game console, a notebook, a multimedia device, a reduced capability (RedCap) device, a wearable device (e.g., a watch, earphones or eyeglasses) with radio parts, a sensor comprising a wireless modem, or any computing device comprising a wireless modem integrated in a vehicle.

It should be appreciated that a UE may also be a nearly exclusive uplink-only device, of which an example may be a camera or video camera loading images or video clips to a network. A UE may also be a device having capability to operate in an Internet of Things (IoT) network, which is a scenario in which objects may be provided with the ability to transfer data over a network without requiring human-to-human or human-to-computer interaction. The UE may also utilize cloud. In some applications, the computation may be carried out in the cloud or in another UE.

The wireless communication network may also be able to support the usage of cloud services, for example at least part of core network operations may be carried out as a cloud service (this is depicted in FIG. 1 by "cloud" 114). The communication system may also comprise a central control entity, or the like, providing facilities for wireless communication networks of different operators to cooperate for example in spectrum sharing.

5G enables using multiple input - multiple output (MIMO) antennas in the access node 104 and/or the UE 100, 102, many more base stations or access nodes than an LTE network (a so-called small cell concept), including macro sites operating in co-operation with smaller stations and employing a variety of radio technologies depending on service needs, use cases and/or spectrum available. 5G wireless communication networks may support a wide range of use cases and related applications including video streaming, augmented reality, different ways of data sharing and various forms of machine type applications, such as (massive) machine-type communications (mMTC), including vehicular safety, different sensors and real-time control.

In 5G wireless communication networks, access nodes and/or UEs may have multiple radio interfaces, namely below 6GHz, cmWave and mmWave, and also being integrable with existing legacy radio access technologies, such as the LTE. Integration with the LTE may be implemented, for example, as a system, where macro coverage may be provided by the LTE, and 5G radio interface access may come from small cells by aggregation to the LTE. In other words, a 5G wireless communication network may support both inter-RAT operability (such as LTE-5G) and inter-RI operability (inter-radio interface operability, such as below 6GHz - cmWave - mmWave). One of the concepts considered to be used in 5G wireless communication networks may be network slicing, in which multiple independent and dedicated virtual sub-networks (network instances) may be created within the substantially same infrastructure to run services that have different requirements on latency, reliability, throughput and mobility.

In some example embodiments, an access node (e.g., access node 104) may comprise: a radio unit (RU) comprising a radio transceiver (TRX), i.e., a transmitter (Tx) and a receiver (Rx); one or more distributed units (DUs) 105 that may be used for the so-called Layer 1 (L1) processing and real-time Layer 2 (L2) processing; and a central unit (CU) 108 (also known as a centralized unit) that may be used for non-real-time L2 and Layer 3 (L3) processing. The CU 108 may be connected to the one or more DUs 105 for example via an F1 interface. Such an embodiment of the access node may enable the centralization of CUs relative to the cell sites and DUs, whereas DUs may be more distributed and may even remain at cell sites. The CU and DU together may also be referred to as baseband or a baseband unit (BBU). The CU and DU may also be comprised in a radio access point (RAP).

The CU 108 may be a logical node hosting radio resource control (RRC), service data adaptation protocol (SDAP) and/or packet data convergence protocol (PDCP), of the NR protocol stack for an access node. The DU 105 may be a logical node hosting radio link control (RLC), medium access control (MAC) and/or physical (PHY) layers of the NR protocol stack for the access node. The operations of the DU may be at least partly controlled by the CU. It should also be understood that the distribution of functions between DU 105 and CU 108 may vary depending on implementation. The CU may comprise a control plane (CU-CP), which may be a logical node hosting the RRC and the control plane part of the PDCP protocol of the NR protocol stack for the access node. The CU may further comprise a user plane (CU-UP), which may be a logical node hosting the user plane part of the PDCP protocol and the SDAP protocol of the CU for the access node.

Cloud computing systems may also be used to provide the CU 108 and/or DU 105. A CU provided by a cloud computing system may be referred to as a virtualized CU (vCU). In addition to the vCU, there may also be a virtualized DU (vDU) provided by a cloud computing system. Furthermore, there may also be a combination, where the DU may be implemented on so-called bare metal solutions, for example application-specific integrated circuit (ASIC) or customer-specific standard product (CSSP) system-on-a-chip (SoC).

Edge cloud may be brought into the access network (e.g., RAN) by utilizing network function virtualization (NFV) and software defined networking (SDN). Using edge cloud may mean access node operations to be carried out, at least partly, in a computing system operationally coupled to a remote radio head (RRH) or a radio unit (RU) of an access node. It is also possible that access node operations may be performed on a distributed computing system or a cloud computing system located at the access node. Application of cloud RAN architecture enables RAN real-time functions being carried out at the access network (e.g., in a DU 105) and non-real-time functions being carried out in a centralized manner (e.g., in a CU 108).

It should also be understood that the distribution of functions between core network operations and access node operations may differ in future wireless communication networks compared to that of the LTE or 5G, or even be non-existent. Some other technology advancements that may be used include big data and all-IP, which may change the way wireless communication networks are being constructed and managed. 5G (or new radio, NR) wireless communication networks may support multiple hierarchies, where multi-access edge computing (MEC) servers may be placed between the core network 110 and the access node 104. It should be appreciated that MEC may be applied in LTE wireless communication networks as well.

A 5G wireless communication network ("5G network") may also comprise a non-terrestrial communication network, such as a satellite communication network, to enhance or complement the coverage of the 5G radio access network. For example, satellite communication may support the transfer of data between the 5G radio access network and the core network, enabling more extensive network coverage. Possible use cases may be providing service continuity for machine-to-machine (M2M) or Internet of Things (IoT) devices or for passengers on board of vehicles, or ensuring service availability for critical communications, and future railway/maritime/aeronautical communications. Satellite communication may utilize geostationary earth orbit (GEO) satellite systems, but also low earth orbit (LEO) satellite systems, in particular mega-constellations (systems in which hundreds of (nano)satellites are deployed). A given satellite 106 in the mega-constellation may cover several satellite-enabled network entities that create on-ground cells. The on-ground cells may be created through an on-ground relay access node or by an access node 104 located on-ground or in a satellite.

It is obvious for a person skilled in the art that the access node 104 depicted in FIG. 1 is just an example of a part of an access network (e.g., a radio access network) and in practice, the access network may comprise a plurality of access nodes, the UEs 100, 102 may have access to a plurality of radio cells, and the access network may also comprise other apparatuses, such as physical layer relay access nodes or other entities. At least one of the access nodes may be a Home eNodeB or a Home gNodeB. A Home gNodeB or a Home eNodeB is a type of access node that may be used to provide indoor coverage inside a home, office, or other indoor environment.

Additionally, in a geographical area of an access network (e.g., a radio access network), a plurality of different kinds of radio cells as well as a plurality of radio cells may be provided. Radio cells may be macro cells (or umbrella cells) which may be large cells having a diameter of up to tens of kilometers, or smaller cells such as micro-, femto- or picocells. The access node(s) of FIG. 1 may provide any kind of these cells. A cellular radio network may be implemented as a multilayer access networks including several kinds of radio cells. In multilayer access networks, one access node may provide one kind of a radio cell or radio cells, and thus a plurality of access nodes may be needed to provide such a multilayer access network.

For fulfilling the need for improving performance of access networks, the concept of "plug-and-play" access nodes may be introduced. An access network which may be able to use "plug-and-play" access nodes, may include, in addition to Home eNodeBs or Home gNodeBs, a Home Node B gateway, or HNB-GW (not shown in FIG. 1). An HNB-GW, which may be installed within an operator's access network, may aggregate traffic from a large number of Home eNodeBs or Home gNodeBs back to a core network of the operator.

Positioning is a process that may be used to estimate a position (e.g., a geographic location) of a UE. Herein the UE to be positioned is referred to as a target UE or target user device. For example, the positioning techniques used in 5G NR may be based on at least one of the following: time difference of arrival (TDoA), time of arrival (TOA), time of departure (TOD), round trip time (RTT), angle of departure (AoD), angle of arrival (AoA), and/or carrier phase.

The position of the target UE may be estimated in an absolute manner (in case of absolute positioning) or in a relative manner (in case of relative positioning).

Absolute positioning refers to estimating the position of the target UE in two-dimensional or three-dimensional geographic coordinates (e.g., latitude, longitude, and/or elevation) within a coordinate system.

Relative positioning refers to estimating the position of the target UE relative to one or more network nodes or relative to one or more other UEs.

In Uu positioning (UL and/or DL positioning), multiple transmission and reception points (TRPs) in known locations may transmit one or more positioning reference signals (PRS) to the target UE, and/or receive and measure one or more positioning reference signals from the target UE. In the uplink, a sounding reference signal (SRS) may be used as a positioning reference signal. The SRS may be configured in terms of various parameters including time-frequency resources, such as bandwidth and periodicity; directivity-related parameters such as beam direction, beam width, number of beams, etc.; and transmit power.

For example, multilateration techniques may then be used to localize (i.e., position) the target UE with respect to the TRPs. At least one TRP out of these TRPs may be used as a positioning anchor, and the differences in TDoA may be computed with respect to this positioning anchor. The positioning anchor may also be referred to as an anchor, anchor node, multilateration anchor, or reference point.

In network-based positioning, the position of the target UE is determined or calculated by a network entity (e.g., gNB or LMF). For network-based positioning, the target UE may report information to the network entity to enable determining the position of the target UE.

In UE-based positioning, the position of the target UE is determined or calculated by the target UE or another UE.

Sidelink (SL) positioning refers to the positioning approach, where the target UE utilizes the sidelink (i.e., the direct device-to-device link) to position itself, either in an absolute manner (in case of absolute positioning) or in a relative manner (in case of relative positioning). SL positioning may be beneficial in, for example (but not limited to), the following use cases: public safety, vehicle-to-everything (V2X), and industrial internet of things (IIoT).

SL positioning may be based on the transmission of a sidelink positioning reference signal (SL-PRS), such as SRS, by multiple anchor UEs (e.g., at least three anchor UEs), wherein the SL-PRS is received and measured by a target UE to enable localization of the target UE (e.g., using SL TDoA techniques) within certain latency and accuracy requirements of the corresponding SL positioning session. Alternatively, or additionally, the target UE may transmit SL-PRS to be received and measured by the anchor UEs. The exchange of SL-PRS between the target UE and anchor UEs may be used, for example, in SL RTT based positioning techniques.

An anchor UE may be defined as a UE supporting positioning of the target UE, for example by transmitting and/or receiving reference signals (e.g., SL-PRS) for positioning over the SL interface. This may be similar to Uu positioning, where gNBs may serve as positioning anchors transmitting and/or receiving reference signals for positioning. Herein an anchor UE may also be referred to as a positioning anchor.

SL-PRS refers to a reference signal transmitted over SL for positioning purposes. SL-PRS may be configured in terms of various parameters including time-frequency resources, such as bandwidth and periodicity; directivity-related parameters such as beam direction, beam width, number of beams, etc.; and transmit power. Such parameters may be collectively referred to as an SL-PRS (pre) configuration.

In a network coverage or partial coverage scenario, the SL-PRS configuration may be determined by a network entity (e.g., LMF or gNB). In an out-of-coverage scenario, the SL-PRS configuration may be (pre) configured and/or determined by UEs autonomously.

For UE-assisted positioning in SL positioning, the target UE may utilize the sidelink to obtain positioning measurements and report the measurements to a network entity such as an LMF. Sidelink positioning may also be used to obtain ranging information. Ranging means determination of the distance between two UEs and/or the direction of one UE from the other one via direct device connection.

In network-assisted sidelink positioning, the network (e.g., LMF) is in control of the sidelink positioning. In this case, the network may perform, for example, anchor (re)selection and/or SL-PRS (reconfiguration, etc. For network-assisted sidelink positioning, the UEs may report information, such as sidelink positioning measurements, to the network.

A UE may be required to comply with a regulatory maximum permissible exposure (MPE) limit and to comply with regulatory electromagnetic field (EMF) exposure limits. MPE is a term used in the field of radio frequency (RF) electromagnetic radiation safety to refer to the highest level of RF energy exposure that is considered to be safe for human exposure. The MPE may be determined based on international safety guidelines and standards, and it may take into account factors such as frequency, duration of exposure, and distance from the source of exposure. For example, the MPE may be measured in units of power density (e.g., W/m²) or specific absorption rate (SAR) in watts per kilogram of body tissue.

To comply with the MPE limit, one possible solution is uplink transmit power back-off, i.e., power management maximum power reduction (P-MPR), which means reducing the uplink transmit power to comply with the MPE limit. However, this may result in radio link failure (RLF) or poor uplink coverage due to insufficient quality of the received signal at the serving gNB. For example, excessive power back-off may lead to selecting the second-best uplink transmit beam at the UE, thus leading to less accurate position (e.g., time, angle and/or phase) estimates compared to using the best uplink transmit beam.

Another possible solution to comply with the MPE limit is to restrict the maxUplinkDutyCycle capability. This approach may avoid high P-MPR in some cases, but it may significantly lower the scheduled bandwidth for uplink transmission, which may result in poor time estimates for positioning purposes. As an example, excessively limiting the uplink duty cycle may prevent uplink transmission, thus leading to severe throughput loss, and potentially even to radio link failure. Furthermore, it should be noted that if the UE is very close to a human user (e.g., at a distance comparable with the antenna array size), then restricting the maxUplinkDutyCycle may not be enough to comply with the MPE limit.

The 5G NR access link may operate in the millimeter wave (mmWave), sub-terahertz (THz) bands, and higher frequency ranges, which are intrinsically more susceptible to higher path loss and penetration loss. In the higher frequency ranges, both the gNB and the UEs may employ front-end circuits with, for example, multiple beam patterns to combat the drawbacks of the propagation channel.

A larger antenna array at the gNB and UE may achieve higher effective isotropic radiated power (EIRP), and thus help to close the radio link, but the underlying MPE requirements still need to be satisfied. Furthermore, the current mobility solutions, such as the baseline handover and conditional handover may not provide enough robustness, and may also lead to significant latency issues. Therefore, in order to comply with the MPE limit, new techniques may be needed for example for higher frequency bands such as frequency range two (FR2) and beyond 52.6 GHz, as well as for near-field and sidelink positioning scenarios.

In wireless communication, a beam refers to an electronically steerable antenna pattern that may be used to focus radio signals in a specific direction. A beam may be considered to be a communication resource, and different beams may be considered as different resources. A beam may also be represented as a spatial filter, spatial direction, or angle. A technology for forming a beam may be referred to as a beamforming technology. The beamforming technology may allow multiple beams to be created simultaneously. The beamforming technology may be a digital beamforming technology, analog beamforming technology, or a hybrid digital/analog beamforming technology. A wireless communication device (e.g., UE or gNB) may communicate with another wireless communication device via one or more beams.

In terms of positioning enhancements, the directional communication may be beneficial, since the network (e.g., LMF) can efficiently localize (position) a target UE due to the higher temporal and angular resolutions, which result from the larger bandwidth and massive antenna array, respectively. However, the directional beamforming for the uplink SRS transmission from UE to gNB may cause energy absorption in the nearby tissues of the human user of the UE, which needs to be constrained in terms of the MPE limit. In other words, the RF EMF exposure of the human user needs to comply with the relevant MPE limit defined by the regularity authorities (e.g., FCC in the United States). The MPE limit may cause some potential uplink beam directions to become unusable for the uplink SRS transmission from the UE, thus leading to less accurate position (e.g., time, angle and/or phase) estimates.

The above issues may also be applicable to sidelink positioning.

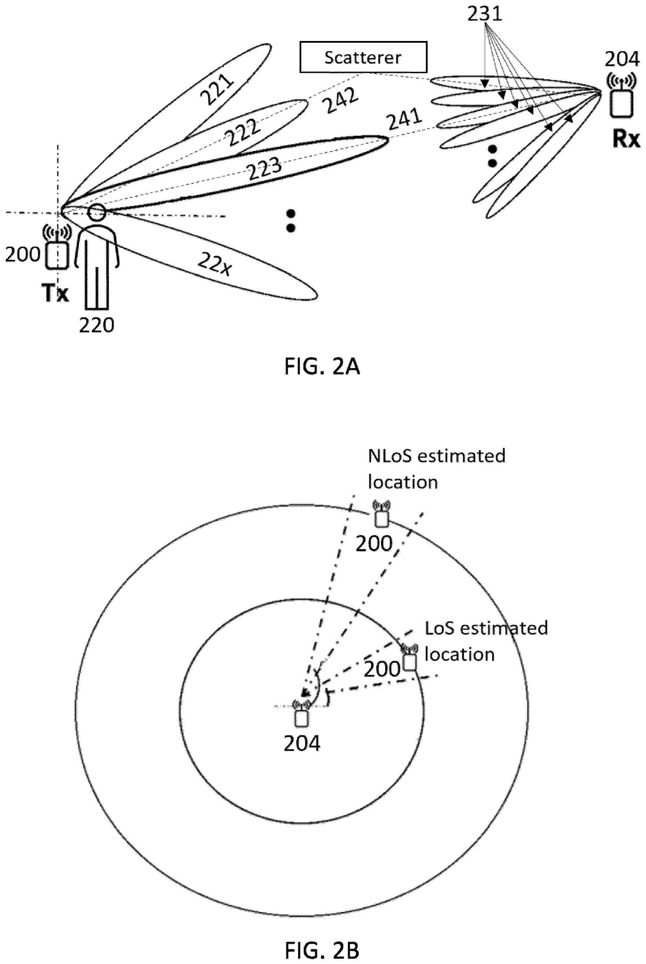

FIG. 2A illustrates an example of a wireless communication scenario, wherein an MPE event associated with a human user 220 restricts a transmitter 200 (e.g., UE) from using some transmit beam directions 221, 222, 223, ... 22x. For example, the UE 200 may be unable to use the best transmit beam direction 223 due to the MPE limit, since the best transmit beam direction 223 is directed toward the human user 220. In FIG. 2A, the UE 200 may determine to use, for example, the second-best transmit beam direction 222 for its SRS transmission in order to comply with the MPE limit, since the second-best beam direction 222 is directed away from the human user 220. However, the SRS transmitted in the second-best transmit beam direction 222 may arrive at the receiver 204 (e.g., gNB or another UE) via a non-line-of-sight (NLoS) path 242 (e.g., via an unknown scatterer), which may lead to less accurate position estimates compared to transmitting the SRS in the best transmit beam direction 223 via a line-of-sight (LoS) path 241.

As shown in FIG. 2B, the positioning measurements with the NLoS path 242, in general, lead to less accurate position (e.g., time, angle and/or phase) estimates compared to the LoS path 241, and hence poor positioning accuracy of the UE 200. The NLoS path 242 leads to increased time, i.e., time of flight (ToF), estimated and incorrect angle estimate, and thus the true position of the target UE 200 cannot be recovered, with the unknown scatterer, in this specific case.

Some example embodiments are described below using principles and terminology of 5G radio access technology without limiting the example embodiments to 5G radio access technology, however. Furthermore, some example embodiments are described below by using MPE as an example of a beam directivity constraint without limiting the example embodiments to MPE.

Some example embodiments may provide an efficient beamforming codebook design and the associated signalings with the aim to retain the potential direction(s) (e.g., LoS path, shortest ToF path, etc) for SRS sounding of a specific target UE, which is constrained by the MPE limit. In other words, some example embodiments may enable efficient and resilient uplink or sidelink beamforming at the UE, such that the UE can retain the potential transmit beam direction(s) for SRS sounding (e.g., under the uncertainties of the radio channel), while complying with the relevant MPE limit defined by the relevant regulatory authorities. Some example embodiments may consider the SRS resource design, beam design, management, and signalling requirements in the case of MPE events.

Some example embodiments may provide a mechanism implemented by the core network (e.g., LMF), one or more gNBs, and a UE. By exploiting the flexible 5G NR frame and slot structure, some example embodiments may provide a procedure and signaling to design, configure, and select one or more MPE-compliant UL SRS resource sets (e.g., using pseudorandom Zadoff-Chu beamforming patterns, etc.), required uplink transmit power, required SRS sounding bandwidth, and ranking, control, and/or selection metrics for SRS sounding in the uplink direction(s) of a given target UE. Furthermore, the information reported by the UE may be exploited to optimize the LoS/NLoS detection thresholds and receive beam at the one or more gNBs, and adaptively prioritize the positioning measurement metrics at the network side (e.g., gNB or LMF) for high-accuracy positioning.

The use of an omni-type pseudorandom beamformer (e.g., use of Zadoff-Chu sequence) provides an ability to exploit the multipath propagation (i.e., provides measurement diversity), instead of relying on a particular rank (direction), while keeping the main potential directions, such as the line of sight (LoS) and/or the shortest time of flight (ToF) path, for uplink transmission. Thus, some example embodiments may increase the throughput and improve positioning accuracy even with reduced radiated power in the desired direction (which is limited by the MPE constraint). This property of a pseudorandom beamformer may solve the drawbacks of legacy techniques (e.g., inaccurate UE position estimate, reduced throughput, possibility of radio link failure, etc.), while maintaining the potential LoS direction, and thus provide more robustness in case of MPE events. In other words, by using pseudorandom Zadoff-Chu beams, the directions of maximum channel gain may be maintained, while satisfying the MPE limit (e.g., by reducing the radiated power), and thus the UE can still transmit on the potential LoS path without P-MPR or switching to the second-best beam.

In an example embodiment for UE-assisted network-based positioning, based on the initial or available or obtained physical layer measurements and/or statistical information (i.e., measurements from one or more previous time slots) associated with a UE, a network node (e.g., gNB or LMF) may pre-emptively determine one or more UE-specific MPE-compliant SRS resource sets for positioning purposes, and then configure and activate the UE with the one or more SRS resource sets. These resources may be designed to be more robust to MPE events for SRS transmission in the uplink direction(s).

For example, for delay-constrained positioning purposes, such as extended reality (XR) or virtual reality (VR) glasses, which are in close proximity of a human user, UL SRS resources may be configured pro-actively or pre-emptively to the UE by the network node (e.g., gNB), to reduce the latency, and thus, improve the quality of service (QoS) of the positioning session.

As another example, when the UE requests positioning in FR2 or higher frequencies, the UE may indicate to take additional measures in the configuration of SRS resources to cope with the MPE limit. In case the UE already encounters a radio link failure, the UE may indicate to take additional measures in the configuration of SRS resources to cope with the MPE. For example, in the case of an MPE event, if the UE is unable to find a suitable SRS resource set, it may declare radio link failure to the serving gNB. In such cases, the UE and gNB need to perform initial access and other beam management processes. Besides, reconfiguration of the SRS resource set after an MPE or RLF event indication involves a significant signaling overhead at the network side, and may also lead to latency issues. Thus, there may be a trade-off such that this proactive configuration may increase signaling overhead in case of no MPE events, but it may avoid excessive latency and network signaling in case of MPE events.

In case of an MPE event (e.g., MPE limit being exceeded in the direction of a human user), the UE may autonomously select the best MPE-compatible SRS resource from the configured one or more SRS resource sets, and (if possible) adjust one or more configurable parameters, such as its uplink transmit power, SRS sounding bandwidth, etc., to satisfy the (minimum) received signal QoS at the gNB(s), while retaining the potential direction(s) (e.g., LoS path, shortest ToF path, etc) for the SRS sounding in the uplink.

Furthermore, upon detection of the MPE event, if any, the UE may signal or report its selected MPE-compatible SRS resource set, and/or corresponding gNB receive beam direction(s), to the gNB or core network (e.g., LMF). This reported information can be used for the threshold optimization of LoS/NLoS detection at the gNB, adaptive prioritization of the positioning measurement metrics at the gNB (e.g., angle, time, phase, etc), intra-cell or inter-cell interference management and cancellation, for improving the baseband signal processing and sampling rate, and stored statistical information for improved configurations of gNB(s) (e.g., for accurate TDoA or ToF measurement and multilateration) in subsequent time instances.

Such a solution may help to avoid the drawbacks of uplink power back-off and reduction of maxUplinkDutyCycle, and/or frequent handover, etc., and thus provide more robustness for uplink SRS sounding (e.g., in case of MPE event). For example, a Zadoff-Chu beamforming pattern may be used to reduce the radiated power in the direction of the human user in order to comply with the MPE limit, while still maintaining the best beam direction (e.g., LoS path and/or shortest ToF path) toward the gNB.

In addition to uplink positioning, some example embodiments may also be applied to sidelink positioning scenarios.

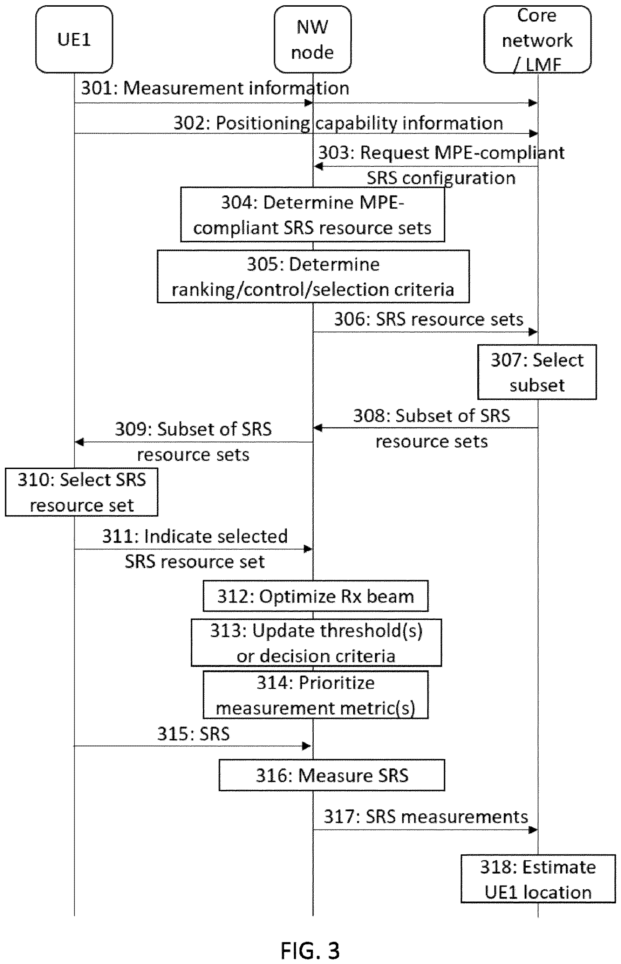

FIG. 3 illustrates a signal flow diagram according to an example embodiment. In FIG. 3, UE1 may correspond to UE 100 of FIG. 1, or the transmitter 200 of FIG. 2A. The network node (NW node) of FIG. 3 may correspond to the access node 104 or UE 102 of FIG. 1, or the receiver 204 of FIG. 2A. The core network of FIG. 3 may correspond to the core network 110 of FIG. 1. For example, the core network of FIG. 3 may refer to a location management function (LMF) of the core network 110.

In another example, the LMF functionalities may be partially or fully located in the access node 104 (NW node) based on the 3GPP TR 38.856 description, where the local LMF or location management component (LMC) is an internal function of the access node 104 (NW node). In case of a split access node (NW node), the LMC may be located in the CU 108 of the access node 104 (NW node). In case of LMC implementation of LMF functionality, the interface between the LMC and the CU 108 may be an internal function of the access node 104 (NW node).

UE1 may be in close proximity to a human user, and therefore constrained by an MPE limit. The MPE limit may also be referred to as an RF EMF exposure limit. As a non-limiting example, UE1 may comprise a mobile phone, or extended reality (XR) glasses, or virtual reality (VR) glasses. Herein UE1 may be a target UE to be positioned. For example, UE1 may be required or configured to use higher frequencies with large SRS sounding bandwidth. In this case, the pre-emptive configuration of one or more MPE-compliant SRS resource sets may be beneficial to avoid any potential RLF, and thus, excessive signaling overhead at the network side, and also to avoid latency issues at UE1.

Referring to FIG. 3, at 301, the first UE (UE1) transmits, to a network node such as a gNB (e.g., serving gNB of UE1) or TRP or a second UE (UE2), measurement information comprising radio environment measurements associated with the first UE. The network node may forward the measurement information to a core network, for example to a location management function (LMF) of the core network. The LMF may have configured the serving gNB (or UE2) and one or more neighbour gNBs (or other UEs) required for the positioning of UE1.

The measurement information may comprise, for example, at least one of: reference signal received power (RSRP), angle of arrival (AoA), time, carrier phase, and/or channel state information reference signal (CSI-RS) measurements.

The first UE may obtain the measurement information by measuring one or more reference signals transmitted from the network node. For example, the one or more reference signals may comprise a channel state information reference signal (CSI-RS) or a downlink positioning reference signal, in case the one or more reference signals are transmitted by the gNB or TRP. In this case, UE1 may have an active radio link with the gNB or TRP (i.e., UE1 may be in RRC connected mode).

As another example, the one or more reference signals may comprise a sounding reference signal (SRS) or a sidelink reference signal. For example, in a sidelink positioning scenario, UE2 may be an anchor UE used for supporting positioning of UE1 by transmitting or receiving a sidelink positioning reference signal (SL-PRS) to or from UE1.

At 302, the first UE transmits, to the network node and/or to the core network (e.g., LMF) positioning capability information associated with the first UE. For example, the LMF may inquire the positioning capability information from the first UE via the LTE positioning protocol (LPP) Capability Transfer procedure.

The positioning capability information may comprise (but is not limited to) at least one of: a number of antenna panels of the first UE, a number of transmit antennas per antenna panel of the first UE, a number of receive antennas per antenna panel of the first UE, a beamforming capability of the first UE, or a type of the first UE. The beamforming capability may mean that the first UE supports beamforming.

At 303, based on the measurement information and/or the positioning capability information associated with the first UE, the core network (e.g., LMF) transmits a request to the network node for MPE-compliant SRS configuration of the first UE. For example, the LMF may determine a possibility of an MPE event associated with UE1 based on the information. The request may be transmitted, for example, in a new radio positioning protocol A (NRPPa) positioning information request message.

At 304, based on the request received at 303, the network node determines, based at least on the measurement information of UE1, the positioning capability information of UE1, and a maximum permissible exposure limit, one or more sounding reference signal resource sets for UE1 such that the maximum permissible exposure limit is not exceeded at UE1, or at least such that the maximum permissible exposure limit is less likely to be exceeded at UE1.

The one or more sounding reference signal resource sets may comprise, for example, at least: one or more beamforming codebooks, one or more transmit power values corresponding to the one or more beamforming codebooks, one or more thresholds or decision criteria associated with a characteristic indicative of spatial selectivity, one or more sounding reference signal bandwidth configurations corresponding to the one or more beamforming codebooks, and one or more positioning measurement metrics corresponding to the one or more beamforming codebooks.

SRS transmission over a very short bandwidth may lead to poor time measurements (e.g., ToA, TDoA, ToF, RTT estimates), and hence less accurate positioning. However, sounding over large bandwidth increases the EMF exposure. However, by using an omni-type Zadoff-Chu beamforming codebook, the SRS bandwidth can be increased, as the EIRP is reduced (compared to a directional beamforming, such as DFT beamforming).

The one or more thresholds or decision criteria associated with a characteristic indicative of spatial selectivity may refer to, for example, one or more LoS/NLoS detection thresholds. A LoS/NLoS detection threshold is a threshold used in wireless communication systems to distinguish between line-of-sight (LoS) and non-line-of-sight (NLoS) propagation paths. This threshold may be used to determine the propagation environment of a wireless link, which can impact the quality of the signal and the performance of the communication system. For example, the threshold may be set based on the received signal strength and/or other parameters such as the signal-to-noise ratio, the angle of arrival and/or time of arrival. The specific value of the threshold may depend on the specific system and the characteristics of the environment.

As an example, the network node may utilize any available or obtained measurement information reported by UE1 (e.g., obtained during the initial access and/or during previous data or control sessions), and then determine a subset of UE-specific potential spatial directions for SRS transmission from UE1. Then, the network node may determine one or more MPE-compliant beamforming codebooks in the determined potential spatial directions based on, for example, a pseudorandom Zadoff-Chu sequence. The network node may also determine (and optimize, if possible) the corresponding (minimum) transmit power, corresponding SRS sounding bandwidth, one or more positioning measurement metrics, corresponding LoS/NLoS detection thresholds, etc.

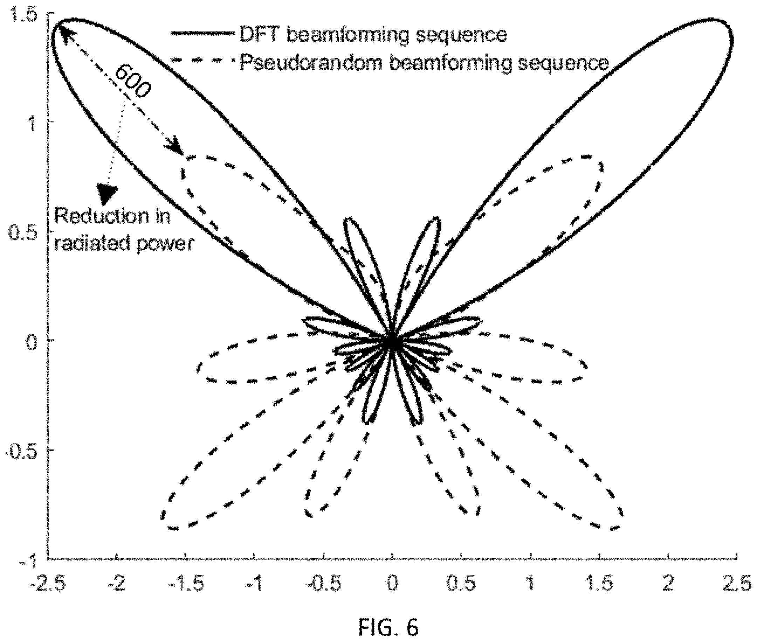

A beamforming codebook is a set of precoded beamforming weight vectors that may be used to control the transmission and/or reception of signals in wireless communication. The beamforming codebook may used in beamforming algorithms to form directional beams from UE1 towards the network node for improved signal quality, reduced interference, and increased coverage, while complying with the MPE limit. The beamforming codebook may comprise beamshaping information and corresponding minimum transmit power level values required for the SRS transmission from UE1. As an example, the beamforming codebook may be based on a Zadoff-Chu sequence. For example, in comparison to discrete Fourier transform (DFT) beams, Zadoff-Chu beams may provide a significant reduction in the radiated power level (as shown in the example of FIG. 6), while also keeping the main potential directions (e.g., LoS and/or shortest ToF path) for SRS transmission.

At 305, in case a plurality of MPE-compliant sounding reference signal resource sets were determined at 304, the network node may also determine the corresponding ranking, control, and/or selection criteria or metrics for UE1. As an example, such metrics may comprise SRS sounding directions, transmit beams, corresponding transmit power, SRS sounding bandwidth, etc., and the ranking and/or selection according to a pre-defined sequence of criteria in hierarchical order and/or based on a predefined weighted combination of criteria.

For example, the network node may determine a ranking of the plurality of sounding reference signal resource sets. Alternatively, or additionally, the network node may determine, based on the maximum permissible exposure limit, one or more criteria for selecting a sounding reference signal resource set from the plurality of sounding reference signal resource sets.

For example, the ranking may indicate UE1 to start the selection process with a first SRS resource set. If the radiated power with the first SRS resource set does not exceed the MPE limit, then UE1 may select the first SRS resource set for its SRS transmission. Alternatively, if the radiated power with the first SRS resource set exceeds the MPE limit, then UE1 may proceed to evaluate the other SRS resource set(s) according to the ranking until it finds an SRS resource set with which the MPE limit is not exceeded. For example, if the MPE limit is exceeded with the first SRS resource set, then UE1 may proceed to a second SRS resource set according to the ranking to check whether the radiated power with the second SRS resource set exceeds the MPE limit. If the radiated power with the second SRS resource set does not exceed the MPE limit, then UE1 may select the second SRS resource set for its SRS transmission. Alternatively, if the radiated power with the second SRS resource set exceeds the MPE limit, then UE1 may proceed to the next SRS resource set according to the ranking to evaluate whether the MPE limit is exceeded with that resource set, and so on, until UE1 finds an SRS resource set with which the MPE limit is not exceeded. In other words, UE1 may determine or compute the radiated power for each SRS resource set based on the ranking until it finds an SRS resource set with which the MPE limit is not exceeded. If none of the SRS resource sets is compatible with the MPE limit (i.e., the MPE limit is exceeded with all of the SRS resource sets), then UE1 may, for example, optimize its transmit power, bandwidth and/or its transmit beam(s) to try to avoid exceeding the MPE limit. If the MPE limit is still exceeded despite this optimization, then UE1 may declare radio link failure.

As another example, the ranking may be based on the LoS and/or shortest ToF path such that the network node may try to keep the LoS path between UE1 and the network node by making UE1 select a Zadoff-Chu beam instead of a DFT beam, in case the MPE limit is exceeded with the DFT beam, since the Zadoff-Chu beam may be more likely to not exceed the MPE limit due to its omni-type radiation.

As another example, the ranking may be based on the expected received signal strength of the SRS transmitted from UE1 to the network node with a given SRS resource set.

At 306, the network node transmits information indicative of the one or more beamforming resource sets to the core network. In this case, the one or more sounding reference signal resource sets may comprise a plurality of sounding reference signal resource sets. The network node may also indicate the ranking and/or the one or more criteria to the core network (e.g., LMF). For example, the network node may transmit the information to the LMF via an NRPPa positioning information response message.

At 307, the core network selects a subset of the plurality of sounding reference signal resource sets. For example, the core network may have information on active UEs in neighboring cells, and thus the core network may efficiently select and/or optimize the subset of UE-specific MPE-compliant SRS resource sets, while considering other parameters, such as higher layer requirements on positioning accuracy, latency, QoS, interference, etc.

In other words, the network node (e.g., gNB or UE2) may first determine one or more SRS resource sets for UE1 and transmit the one or more SRS resource sets to the core network, and the core network may further select (and possibly optimize) a subset of the one or more SRS resource sets reported from the network node by considering at least one of: the impact of intra-cell or inter-cell interference, the UE category of UE1, and higher layer requirements of UE1.

For example, some beamforming directions may lead to severe inter-cell interference, and thus the core network may proactively avoid or omit these directions. For example, the core network may configure different root Zadoff-Chu sequences for different UEs to avoid any excessive intra-cell or inter-cell interference. In general, the spatially separated Zadoff-Chu directions per UE may lead to better interference management in the uplink at the serving gNB, and thus, it may improve cell edge coverage and achievable data rate per UE.

Furthermore, by utilizing the higher layer requirements and UE category information, the core network may prioritize a subset of UEs associated with stricter reliability and latency constraints, for example by configuring a plurality of alternative beamforming codebook(s), and/or ranking, control, and selection metrics, in order to avoid uplink power back-off, reduction of maxUplinkDutyCycle, and/or possibly radio link failure in case of an MPE event. For example, the core network may prioritize UE1, as it may have stricter reliability and latency constraints than other UEs. Thus, radio link failure may be avoided by pre-emptively configuring UE1 with additional resources. Alternatively, or additionally, UE1 may be configured with better beamforming direction(s) (than other UEs) to achieve a high received signal-to-interference-plus-noise ratio (SINR) of the SRS transmissions transmitted from UE1.

At 308, the core network (e.g., LMF) transmits, to the network node, information indicating the (optimized) subset of SRS resource sets. The LMF may request the network node to activate UE1 with this subset of SRS resource sets. For example, the LMF may transmit the request via an NRPPa positioning activation request message. The network node receives the information.

At 309, the network node transmits, to UE1, a message, for example downlink control information (DCI) or sidelink control information (SCI), indicative of the subset of SRS resource sets. In other words, the network node may configure and activate the (optimized) UE-specific MPE-compliant SRS resources to UE1 by using a shared and/or dedicated control channel. The network node may also configure UE1 with scheduling information, for example resource elements, for the SRS transmission from UE1.

Alternatively, or additionally, the message may comprise information indicative of the ranking of the SRS resource sets and/or the one or more selection criteria corresponding to the subset of SRS resource sets.

The network node may also transmit an NRPPa positioning activation response message to the LMF to confirm the activation of the subset of SRS resource sets at UE1. The LMF may provide the required information, such as the subset of SRS resource sets, etc., to one or more neighbor gNBs (or other UEs), that may be required for the positioning measurements. For example, the LMF may provide this information in an NRPPa measurement request message.

At 310, UE1 selects an SRS resource set from the subset of SRS resource sets such that the maximum permissible exposure limit is not exceeded at UE1 with the selected SRS resource set. For example, the SRS resource set may be selected based at least partly on the ranking and/or the one or more selection criteria.

If any MPE event is detected (e.g., if the MPE limit is exceeded with a previous SRS resource set in the direction of a human user), UE1 may autonomously select the best SRS resource set, which complies with the MPE limit, while satisfying the expected received signal strength or quality at the network node.

For example, based on the one or more ranking, control, and/or selection criteria or metrics configured and activated by the network node, UE1 may determine or compute the RF EMF exposure per antenna panel of UE1 in ascending or descending chronological order and/or hierarchical order and/or weighted combinations, etc., of the subset of SRS resource sets, and select the best SRS resource set accordingly.

For example, the MPE event may be detected via one or more in-built sensors of UE1. For example, a proximity sensor may be used to detect if a human body is close to UE1. As another example, UE1 may compare the maximum allowable transmission power levels to a pre-defined threshold associated with the MPE limit. The threshold may relate to, for example, a total radiated power, a maximum output power, an effective isotropic radiated power (EIRP), a radiated power on a single beam, a radiated power on a beam directed toward the human user of UE1, etc.

At 311, UE1 may transmit, to the network node, an indication indicating the SRS resource set selected by UE1 from the subset of SRS resource sets. For example, UE1 may report, to the network node, the index of the selected SRS resource set. The SRS resource set selected by UE1 may be indicated to one or more neighbour gNBs via Xn interface directly by the serving gNB (i.e., the network node) or by the LMF.

Alternatively, if UE1 was unable to select a suitable MPE-compliant SRS resource set, then UE1 may transmit, to the network node, an indication indicating radio link failure and a request for a new SRS resource set. In this case, UE1 may indicate one or more preferred SRS resource sets to the network node in order to avoid successive radio link failure, and the network node may then configure a new SRS resource set to UE1 for example based on the one or more preferred SRS resource sets (if the network node has the corresponding resources available).

At 312, the network node may optimize at least one corresponding receive beam of the network node based on the indication received from UE1 at 311 such that a spatial direction, for example a line-of-sight direction, toward UE1 is maintained. Maintaining the LoS direction may improve the positioning accuracy, as explained above with reference to FIG. 2A and 2B. For example, based on the selected SRS resource set of UE1, the network node may optimize its corresponding receive beam(s) in order to improve the receive signal strength of the SRS transmission from UE1 and/or to avoid any potential interference on configured resources of other active UE(s). For example, the network node may optimize its receive beam(s) by using beam shaping, reconfiguring beamforming weights, etc. so as to improve the received signal strength at the network node (and/or at other positioning anchors).

At 313, the network node may update, based on the indication received from UE1 at 311, one or more thresholds or decision criteria associated with a characteristic indicative of spatial selectivity to be used for positioning associated with the UE1. For example, the one or more thresholds or decision criteria may refer to one or more multipath threshold, i.e., LoS/NLoS detection thresholds. This may help to achieve better identification of LoS and NLoS path(s), improved power-delay estimations for positioning measurements, and thus more accurate positioning of UE1.

At 314, the network node may determine, based on the indication received from UE1 at 311, one or more positioning measurement metrics to be prioritized for measuring the sounding reference signal transmitted from UE1. The one or more positioning measurement metrics may comprise, for example, at least one of: angle, time, and/or carrier phase. This way, by knowing the selected SRS resource set (e.g., transmit direction, beam pattern, corresponding transmit power, SRS sounding bandwidth, etc) of the target UE, the network node may adaptively prioritize the positioning measurement metric(s).

For example, if the selected SRS resource set indicates that UE1 is using a DFT beam for transmitting SRS, the network node may prioritize angle-based measurements for positioning of UE1 (i.e., for measuring SRS transmitted from UE1) due to comparatively higher angle resolutions.

As another example, if the selected SRS resource set indicates that UE1 is using a pseudorandom Zadoff-Chu beam for transmitting SRS, the network node may prioritize time-based measurements for positioning of UE1 (i.e., for measuring SRS transmitted from UE1). The Zadoff-Chu beam enables to retain the main potential directions (e.g., LoS path, shortest ToF path) and enriches the channel condition (i.e., diversifies the measurements by exploiting multi-paths). In this case, wideband SRS sounding may be needed to achieve higher time resolution and multipath resolution, and thus high-accuracy positioning.

At 315, UE1 transmits one or more sounding reference signals to the network node based on the selected sounding reference signal resource set. In other words, UE1 transmits the one or more sounding reference signals according to the time-domain and frequency-domain behavior of the selected SRS resource set. The SRS may be transmitted such that the maximum permissible exposure limit is not exceeded, and an expected received signal strength of the one or more sounding reference signals at the network node is above a threshold.

UE1 may optimize one or more transmit beams to radiate an amount of power in one or more other directions than a direction associated with the maximum permissible exposure limit (e.g., a direction in which a human body is detected) such that the maximum permissible exposure limit is not exceeded in that direction, and such that a spatial direction, for example a line-of-sight direction, toward the network node is maintained. In this case, the one or more sounding reference signals may be transmitted to the network node via the optimized one or more transmit beams.

Alternatively, or additionally, UE1 may transmit the one or more sounding reference signals by adjusting a transmit power of the one or more sounding reference signals such that an expected received signal strength of the one or more sounding reference signals at the network node is above a threshold, and such that the maximum permissible exposure limit is not exceeded.

Alternatively, or additionally, UE1 may transmit the one or more sounding reference signals by adjusting a bandwidth of the one or more sounding reference signals such that an expected received signal strength of the one or more sounding reference signals is above a threshold, and such that the maximum permissible exposure limit is not exceeded. For example, the apparatus may reduce the SRS bandwidth by using the masking or hopping patterns on the actual configured bandwidth.

At 316, the network node receives and measures the one or more sounding reference signals from UE1.

The network node may receive the one or more sounding reference signals via the at least one receive beam that may be optimized by the network node at 312.

The network node may measure the one or more uplink reference signals received from UE1 by prioritizing the one or more positioning measurement metrics that may be determined at 314.

At 317, the network node may transmit, to the core network (e.g., LMF), a report message comprising the SRS measurements measured by the network node at 316. For example, the SRS measurements may be reported in an NRPPa measurement response message transmitted to the LMF in response to the NRPPa measurement request message received from the LMF.

The network node may also indicate, to the core network, at least one of: the at least one receive beam optimized by the network node, the one or more LoS/NLoS thresholds updated by the network node, the one or more positioning measurement metrics prioritized by the network node, and/or the at least one SRS resource set selected by UE1. This information may be reported in the same message as the UL SRS measurements, or in a separate message.

At 318, the core network (e.g., LMF) estimates the location of UE1 based at least on the SRS measurements reported by the network node. The LMF may also utilize additional information reported from the network node for estimating the location of UE1.

For example, instead of one power-delay estimate, the network node may report the additional soft or hard information on multiple peaks of power delay profile (PDP), which may be useful in the corrections, optimization, and refinement of the reported SRS-based positioning measurements, and prioritization of the positioning measurement metrics for localization (positioning) at the LMF, intra-cell or inter-cell interference management and cancellation, etc. This may improve the overall baseband signal processing aspects, i.e., efficient resolution of multipath components at the core network for achieving high-accuracy positioning of UE1.

As another example, the core network may store the above reported information on, for example, the SRS resource set selected by UE1, the corresponding at least one receive beam optimized by the network node, and the respective prioritized one or more positioning measurement metrics, as acquired statistical information, which may be used for the efficient configuration of one or more UE-specific MPE-compliant SRS resource sets in the subsequent time slots.

After estimating the location of UE1, the LMF may transmit an NRPPa positioning deactivation request message to the network node for requesting the network node to stop the SRS measurements of UE1.

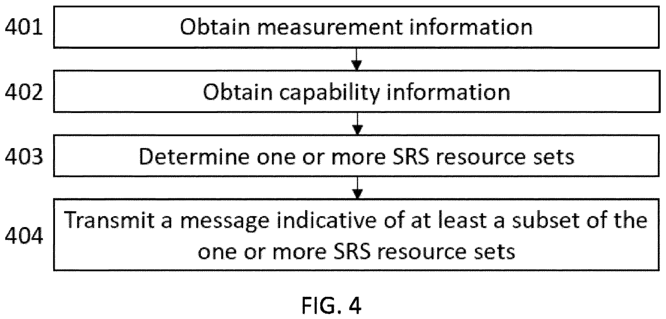

FIG. 4 illustrates a flow chart according to an example embodiment of a method performed by an apparatus. For example, the apparatus may be, or comprise, or be comprised in, a network node of a radio access network. The network node may correspond to UE 102 or the access node 104 of FIG. 1, or the receiver 204 of FIG. 2A, or the network node of FIG. 3.

Referring to FIG. 4, in block 401, the apparatus obtains measurement information comprising radio environment measurements associated with a user device (e.g., UE 100 of FIG. 1, or transmitter 200 of FIG. 2A, or UE1 of FIG. 3). For example, the measurement information may comprise at least one of: RSRP, AoA, time, phase, and/or CSI-RS measurements. For example, the measurement information may be obtained by receiving, from the user device, a measurement report comprising the measurement information. Alternatively, or additionally, the measurement information may comprise historical (statistical) measurement information obtained from an external or internal database, for example.

In block 402, the apparatus obtains capability information associated with the user device. For example, the capability information may be obtained by receiving it from the user device or from a core network (e.g., LMF) or from an internal or external database.

For example, the capability information may comprise (but is not limited to) at least one of: a number of antenna panels of the user device, a number of transmit antennas per antenna panel of the user device, a number of receive antennas per antenna panel of the user device, a beamforming capability of the user device, or a type of the user device.

In block 403, the apparatus determines, based at least on the measurement information, the capability information and a beam directivity constraint, one or more sounding reference signal resource sets for the user device.

For example, the beam directivity constraint may comprise at least a maximum permissible exposure limit. As another example, if the user device and another user device are scheduled in the same frame, and share the same spatial LoS direction towards the apparatus, then the beam directivity constraint may be used to limit the beam directivity of the user device in order to improve the signal received from the other user device (e.g., by reducing the interference).

In block 404, the apparatus transmits, to the user device, a message indicative of at least a subset of the one or more sounding reference signal resource sets.

For example, the one or more sounding reference signal resource sets may be used or intended for positioning of the user device (i.e., by measuring SRS transmitted from the user device based on the SRS resource set). As another example, the one or more sounding reference signal resource sets may be used or intended for estimating the channel between the apparatus and the user device. However, it should be noted that sounding reference signals may also be used for other purposes, and the embodiments are not limited to these examples.

For example, the one or more sounding reference signal resource sets may comprise at least: one or more beamforming codebooks, one or more transmit power values corresponding to the one or more beamforming codebooks, one or more thresholds or decision criteria associated with a characteristic indicative of spatial selectivity, one or more sounding reference signal bandwidth configurations corresponding to the one or more beamforming codebooks, and one or more positioning measurement metrics corresponding to the one or more beamforming codebooks. The one or more thresholds or decision criteria associated with a characteristic indicative of spatial selectivity may refer to, for example, one or more LoS/NLoS detection thresholds. The one or more positioning measurement metrics may comprise, for example, at least one of: angle, time, and/or carrier phase.

In case the one or more sounding reference signal resource sets comprise a plurality of sounding reference signal resource sets, the apparatus may further determine a ranking of the one or more sounding reference signal resource sets, wherein the message may comprise information indicative of the ranking.

Alternatively, or additionally, the apparatus may determine, based on the beam directivity constraint (e.g., maximum permissible exposure limit), one or more criteria for selecting a sounding reference signal resource set from the message, wherein the message may comprise information indicative of the one or more criteria.

The apparatus may transmit, to a core network entity or a location management entity, such as a location management function or a location management component, information indicating the one or more sounding reference signal resource sets; and receive, from the core network entity or the location management entity, information comprising the subset of the one or more sounding reference signal resource sets. In this case, the message transmitted to the user device may comprise the subset of the one or more sounding reference signal resource sets.

The apparatus may receive, from the user device, an indication indicating a sounding reference signal resource set selected by the user device from the message.

The apparatus may transmit, to one or more network nodes (e.g., neighboring gNBs or user devices), an indication indicating the sounding reference signal resource set selected by the user device.

The apparatus may optimize at least one receive beam based on the indication received from the user device such that a spatial direction toward the user device is maintained; and receive one or more sounding reference signals from the user device via the optimized at least one receive beam.

The apparatus may determine, based on the indication received from the user device, one or more positioning measurement metrics to be prioritized; and measure the one or more uplink reference signals received from the user device by prioritizing the one or more positioning measurement metrics.

The apparatus may update, based on the indication received from the user device, one or more thresholds or decision criteria associated with a characteristic indicative of spatial selectivity to be used for positioning associated with the user device. The one or more thresholds or decision criteria may refer to, for example, one or more LoS/NLoS thresholds.

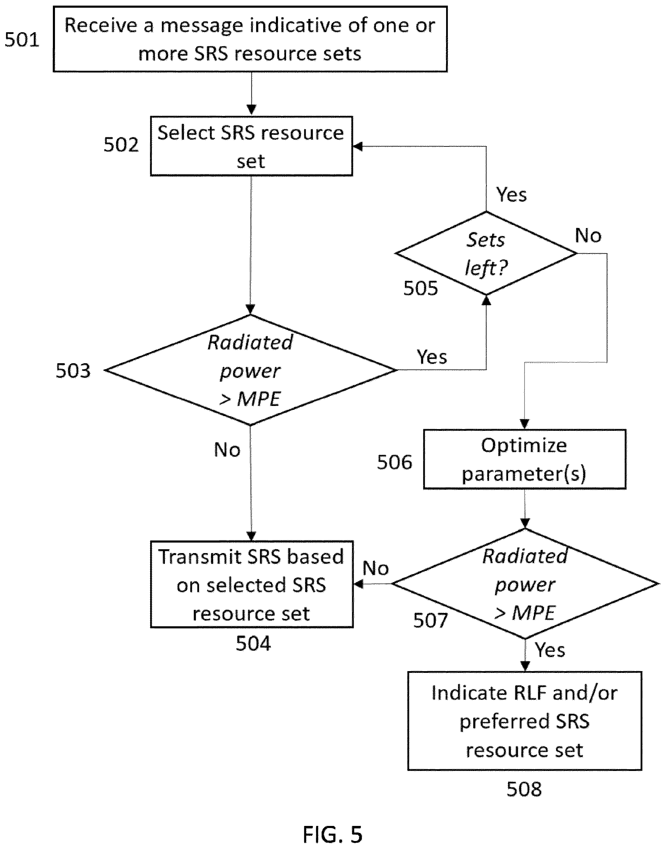

FIG. 5 illustrates a flow chart according to an example embodiment of a method performed by an apparatus. For example, the apparatus may be, or comprise, or be comprised in, a user device. The user device may correspond to UE 100 of FIG. 1, or the transmitter 200 of FIG. 2A, or UE1 of FIG. 3.

Referring to FIG. 5, in block 501, the apparatus receives, from a network node, a message indicative of one or more sounding reference signal resource sets, wherein the one or more sounding reference signal resource sets are based at least on measurement information associated with the apparatus, capability information associated with the apparatus, and a beam directivity constraint, the measurement information comprising radio environment measurements associated with the apparatus.

For example, the beam directivity constraint may comprise at least a maximum permissible exposure limit.

The network node may be, for example, an access node such as a gNB, or another user device.

The capability information may comprise at least one of: a number of antenna panels of the apparatus, a number of transmit antennas per antenna panel of the apparatus, a number of receive antennas per antenna panel of the apparatus, a beamforming capability of the apparatus, or a type of the apparatus. For example, the apparatus may transmit the capability information to the network node or to another entity (e.g., a core network entity), which may transmit the capability information to the network node.

In block 502, the apparatus selects a sounding reference signal resource set from the one or more sounding reference signal resource sets.

For example, the sounding reference signal resource set may comprise at least: a beamforming codebook, a transmit power value corresponding to the beamforming codebook, one or more thresholds or decision criteria associated with a characteristic indicative of spatial selectivity, a sounding reference signal bandwidth configuration corresponding to the beamforming codebook, and one or more positioning measurement metrics corresponding to the beamforming codebook. The one or more thresholds or decision criteria may refer to, for example, one or more LoS/NLoS thresholds. The one or more positioning measurement metrics may comprise, for example, at least one of: angle, time, and/or carrier phase.

For example, the message received in block 501 may further comprise information indicative of a ranking of the one or more sounding reference signal resource sets, in which case the one or more sounding reference signal resource sets may comprise a plurality of sounding reference signal resource sets. In this case, the sounding reference signal resource set may be selected based at least partly on the ranking.

In block 503, the apparatus determines whether the radiated power with the selected sounding reference signal resource set exceeds (i.e., is above) the maximum permissible exposure limit (e.g., in one or more directions in which a human body is detected). In other words, the apparatus determines whether the beam directivity constraint is satisfied.

In block 504, if the radiated power does not exceed (i.e., is not above) the maximum permissible exposure limit (block 503: no), then the apparatus transmits one or more sounding reference signals to the network node based on the selected sounding reference signal resource set such that the maximum permissible exposure limit is not exceeded (i.e., such that the beam directivity constraint is satisfied). For example, the one or more sounding reference signals may be transmitted to support positioning of the apparatus.

Alternatively, in block 505, if the radiated power in the selected at least one transmit beam direction exceeds the maximum permissible exposure limit (block 503: yes) (i.e., the beam directivity constraint is not satisfied), then the apparatus may check if there are one or more other sounding reference signal resource sets available in the received one or more sounding reference signal resource sets.

If there are one or more other sounding reference signal resource sets available (block 505: yes), then the process may return to block 502 and continue from there, i.e., the apparatus may select another sounding reference signal resource set from the received one or more sounding reference signal resource sets (e.g., based on the ranking) and determine whether the radiated power with the other sounding reference signal resource set exceeds the maximum permissible exposure limit. In other words, the apparatus may iteratively or sequentially evaluate the sounding reference signal resource sets until the apparatus finds a sounding reference signal resource set with which the maximum permissible exposure limit is not exceeded.

Alternatively, in block 506, if the maximum permissible exposure limit is exceeded with all of the one or more sounding reference signal resource sets (block 505: no), the apparatus may optimize one or more SRS-related parameters, such as transmit power, bandwidth and/or beam shaping, to try to avoid exceeding the maximum permissible exposure limit.

For example, the apparatus may optimize one or more transmit beams to radiate an amount of power in one or more other directions than a direction associated with the maximum permissible exposure limit (e.g., a direction in which a human body is detected) such that the maximum permissible exposure limit is not exceeded in that direction, and such that a spatial direction (e.g., LoS path) toward the network node is maintained.

Alternatively, or additionally, the apparatus may adjust a transmit power of the one or more sounding reference signals such that an expected received signal strength of the one or more sounding reference signals is above a threshold, and such that the maximum permissible exposure limit is not exceeded.

Alternatively, or additionally, the apparatus may adjust a bandwidth of the one or more sounding reference signals such that an expected received signal strength of the one or more sounding reference signals is above a threshold, and such that the maximum permissible exposure limit is not exceeded. For example, the apparatus may reduce the SRS bandwidth by using the masking or hopping patterns on the actual configured bandwidth.

In block 507, after optimizing the one or more SRS-related parameters, the apparatus determines whether the radiated power exceeds the maximum permissible exposure limit (i.e., whether the beam directivity constraint is satisfied).

If the radiated power does not exceed (i.e., is not above) the maximum permissible exposure limit (block 507: no) after optimizing the one or more SRS-related parameters (i.e., the beam directivity constraint is satisfied), then in block 504 the apparatus transmits the one or more sounding reference signals to the network node based on the selected sounding reference signal resource set and the optimized one or more SRS-related parameters. For example, in this case, the one or more sounding reference signals may be transmitted to the network node via the one or more optimized transmit beams, and/or by adjusting the transmit power as described above, and/or by adjusting the bandwidth as described above.

Alternatively, in block 508, if the MPE limit is still exceeded despite the optimization of block 506 (block 507: yes) (i.e., the beam directivity constraint is not satisfied), then the apparatus may transmit, to the network node, an indication indicating radio link failure and a request for a new sounding reference signal resource set. In this case, the apparatus may indicate one or more preferred sounding reference signal resource sets in the indication in order to avoid successive radio link failure.

The blocks, related functions, and information exchanges (messages) described above by means of FIGS. 3-5 are in no absolute chronological order, and some of them may be performed simultaneously or in an order differing from the described one. Other functions can also be executed between them or within them, and other information may be sent, and/or other rules applied. Some of the blocks or part of the blocks or one or more pieces of information can also be left out or replaced by a corresponding block or part of the block or one or more pieces of information.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

FIG. 6 illustrates a normalized EIRP of a specific DFT beamforming sequence and a specific pseudorandom beamforming sequence (e.g., Zadoff-Chu sequence). The plot in FIG. 6 shows the radians in the X-axis and Y-axis for the beamforming pattern. As shown by the arrow 600 in FIG. 6, a significant reduction in radiated power may be obtained with the pseudorandom beamforming sequence in comparison to the DFT beamforming sequence.

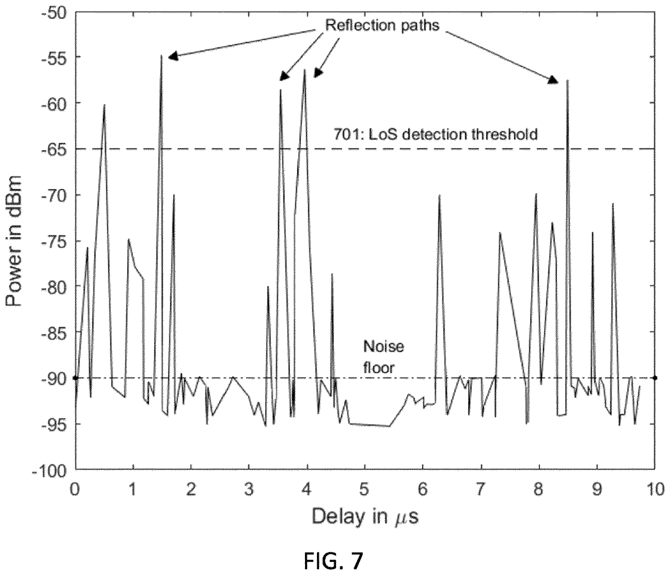

FIG. 7 illustrates an example of a power-delay profile of multipaths with weak LoS. Due to the psedurandom shifted Zadoff-Chu sequence, there is a high possibility of weak LoS, for example under MPE events. In such scenarios, a careful selection of the LoS detection threshold 701 may be needed.

In the standard DFT or directional beamforming, the sidelobes have no (or less significant) contributions, i.e., the sidelobes are generally 20 - 30 dB lower in received power than the main lobe, and the sidelobes may be potentially ignored in the standard DFT or directional beamforming codebooks. In contrast, the pseudorandom shifted Zadoff-Chu sequence has omni-type beamforming patterns, and thus it enriches the channel conditions by introducing equally potential multipath components. In other words, the sidelobes in Zadoff-Chu beamforming may have the same order power-delay profile (PDP). More specifically, in this case, detecting a true LoS path can be challenging, if the received power is weaker or comparable, and may lead to false detections, and thus inaccurate time-delay estimates and UE position estimates. Therefore, for such UE's omni-type beamforming, the gNB may need to configure and activate UL SRS sounding over wideband, in order to efficiently resolve these multipath components. Moreover, the LoS/NLoS detection threshold should be adjusted and the corresponding sounding bandwidth should be carefully agreed or optimized with the network (e.g., LMF or gNB(s). Thus, the serving gNB may need to carefully design UE-specific MPE-compatible UL SRS resource set(s), (e.g., beamforming codebook(s), corresponding LoS/NLoS detection threshold(s), required transmit power, required SRS sounding bandwidth and ranking/control/selection metrics) for SRS sounding in the uplink direction(s). Moreover, knowing the selected UL SRS resource set of the target UE, the gNB(s) may proactively prioritize the positioning measurement metrics and optimize its UL receive beams, if applicable, so as to achieve high-accuracy UE positioning.

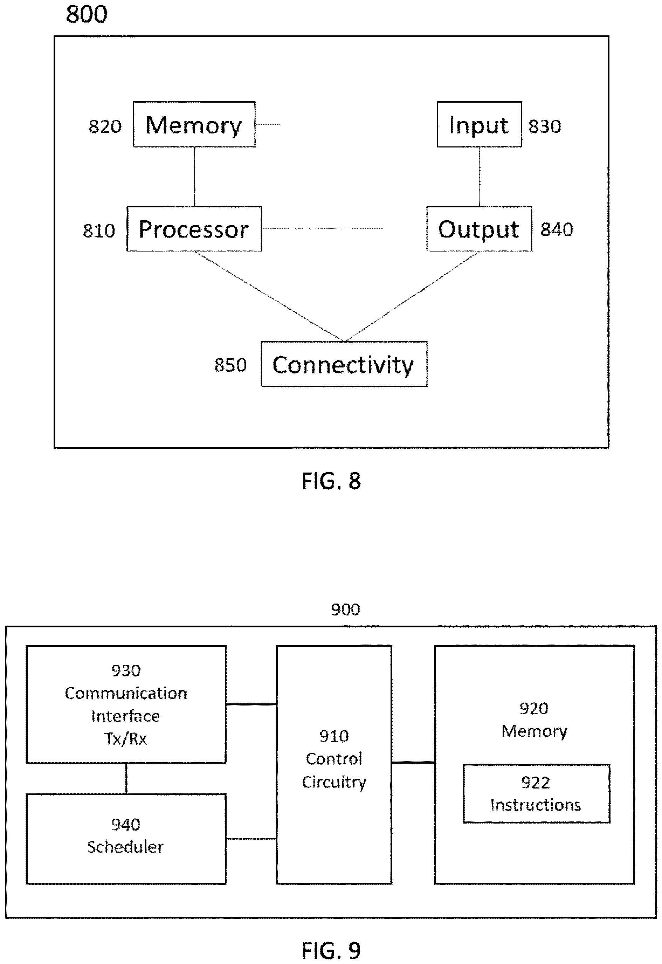

FIG. 8 illustrates an example of an apparatus 800 comprising means for performing one or more of the example embodiments described above. For example, the apparatus 800 may be an apparatus such as, or comprising, or comprised in, a user device. The user device may also be called a wireless communication device, a subscriber unit, a mobile station, a remote terminal, an access terminal, a user terminal, a terminal device, or user equipment (UE). The user device may correspond to one of the UEs 100, 102 of FIG. 1, or the transmitter 200 or receiver 204 of FIG. 2A, or UE1 or the network node of FIG. 3.

The apparatus 800 may comprise a circuitry or a chipset applicable for realizing one or more of the example embodiments described above. For example, the apparatus 800 may comprise at least one processor 810. The at least one processor 810 interprets instructions (e.g., computer program instructions) and processes data. The at least one processor 810 may comprise one or more programmable processors. The at least one processor 810 may comprise programmable hardware with embedded firmware and may, alternatively or additionally, comprise one or more application-specific integrated circuits (ASICs).

The at least one processor 810 is coupled to at least one memory 820. The at least one processor is configured to read and write data to and from the at least one memory 820. The at least one memory 820 may comprise one or more memory units. The memory units may be volatile or non-volatile. It is to be noted that there may be one or more units of non-volatile memory and one or more units of volatile memory or, alternatively, one or more units of non-volatile memory, or, alternatively, one or more units of volatile memory. Volatile memory may be for example random-access memory (RAM), dynamic random-access memory (DRAM) or synchronous dynamic random-access memory (SDRAM). Non-volatile memory may be for example read-only memory (ROM), programmable read-only memory (PROM), electronically erasable programmable read-only memory (EEPROM), flash memory, optical storage or magnetic storage. In general, memories may be referred to as non-transitory computer readable media. The term "non-transitory," as used herein, is a limitation of the medium itself (i.e., tangible, not a signal) as opposed to a limitation on data storage persistency (e.g., RAM vs. ROM). The at least one memory 820 stores computer readable instructions that are executed by the at least one processor 810 to perform one or more of the example embodiments described above. For example, non-volatile memory stores the computer readable instructions, and the at least one processor 810 executes the instructions using volatile memory for temporary storage of data and/or instructions. The computer readable instructions may refer to computer program code.

The computer readable instructions may have been pre-stored to the at least one memory 820 or, alternatively or additionally, they may be received, by the apparatus, via an electromagnetic carrier signal and/or may be copied from a physical entity such as a computer program product. Execution of the computer readable instructions by the at least one processor 810 causes the apparatus 800 to perform one or more of the example embodiments described above. That is, the at least one processor and the at least one memory storing the instructions may provide the means for providing or causing the performance of any of the methods and/or blocks described above.

In the context of this document, a "memory" or "computer-readable media" or "computer-readable medium" may be any non-transitory media or medium or means that can contain, store, communicate, propagate or transport the instructions for use by or in connection with an instruction execution system, apparatus, or device, such as a computer. The term "non-transitory," as used herein, is a limitation of the medium itself (i.e., tangible, not a signal) as opposed to a limitation on data storage persistency (e.g., RAM vs. ROM).

The apparatus 800 may further comprise, or be connected to, an input unit 830. The input unit 830 may comprise one or more interfaces for receiving input. The one or more interfaces may comprise for example one or more temperature, motion and/or orientation sensors, one or more cameras, one or more accelerometers, one or more microphones, one or more buttons and/or one or more touch detection units. Further, the input unit 830 may comprise an interface to which external devices may connect to.

The apparatus 800 may also comprise an output unit 840. The output unit may comprise or be connected to one or more displays capable of rendering visual content, such as a light emitting diode (LED) display, a liquid crystal display (LCD) and/or a liquid crystal on silicon (LCoS) display. The output unit 840 may further comprise one or more audio outputs. The one or more audio outputs may be for example loudspeakers.

The apparatus 800 further comprises a connectivity unit 850. The connectivity unit 850 enables wireless connectivity to one or more external devices. The connectivity unit 850 comprises at least one transmitter and at least one receiver that may be integrated to the apparatus 800 or that the apparatus 800 may be connected to. The at least one transmitter comprises at least one transmission antenna, and the at least one receiver comprises at least one receiving antenna. The connectivity unit 850 may comprise an integrated circuit or a set of integrated circuits that provide the wireless communication capability for the apparatus 800. Alternatively, the wireless connectivity may be a hardwired application-specific integrated circuit (ASIC). The connectivity unit 850 may also provide means for performing at least some of the blocks or functions of one or more example embodiments described above. The connectivity unit 850 may comprise one or more components, such as: power amplifier, digital front end (DFE), analog-to-digital converter (ADC), digital-to-analog converter (DAC), frequency converter, (de)modulator, and/or encoder/decoder circuitries, controlled by the corresponding controlling units.

It is to be noted that the apparatus 800 may further comprise various components not illustrated in FIG. 8. The various components may be hardware components and/or software components.

FIG. 9 illustrates an example of an apparatus 900 comprising means for performing one or more of the example embodiments described above. For example, the apparatus 900 may be an apparatus such as, or comprising, or comprised in, a network node of a radio access network. The network node may correspond to the access node 104 of FIG. 1, or the receiver 204 of FIG. 2A, or the gNB of FIG. 3.

The network node may also be referred to, for example, as a network element, a radio access network (RAN) node, a next generation radio access network (NG-RAN) node, a NodeB, an eNB, a gNB, a base transceiver station (BTS), a base station, an NR base station, a 5G base station, an access node, an access point (AP), a cell site, a relay node, a repeater, an integrated access and backhaul (IAB) node, an IAB donor node, a distributed unit (DU), a central unit (CU), a baseband unit (BBU), a radio unit (RU), a radio head, a remote radio head (RRH), or a transmission and reception point (TRP).

The apparatus 900 may comprise, for example, a circuitry or a chipset applicable for realizing one or more of the example embodiments described above. The apparatus 900 may be an electronic device comprising one or more electronic circuitries. The apparatus 900 may comprise a communication control circuitry 910 such as at least one processor, and at least one memory 920 storing instructions 922 which, when executed by the at least one processor, cause the apparatus 900 to carry out one or more of the example embodiments described above. Such instructions 922 may, for example, include computer program code (software). The at least one processor and the at least one memory storing the instructions may provide the means for providing or causing the performance of any of the methods and/or blocks described above.

The processor is coupled to the memory 920. The processor is configured to read and write data to and from the memory 920. The memory 920 may comprise one or more memory units. The memory units may be volatile or non-volatile. It is to be noted that there may be one or more units of non-volatile memory and one or more units of volatile memory or, alternatively, one or more units of non-volatile memory, or, alternatively, one or more units of volatile memory. Volatile memory may be for example random-access memory (RAM), dynamic random-access memory (DRAM) or synchronous dynamic random-access memory (SDRAM). Non-volatile memory may be for example read-only memory (ROM), programmable read-only memory (PROM), electronically erasable programmable read-only memory (EEPROM), flash memory, optical storage or magnetic storage. In general, memories may be referred to as non-transitory computer readable media. The term "non-transitory," as used herein, is a limitation of the medium itself (i.e., tangible, not a signal) as opposed to a limitation on data storage persistency (e.g., RAM vs. ROM). The memory 920 stores computer readable instructions that are executed by the processor. For example, non-volatile memory stores the computer readable instructions, and the processor executes the instructions using volatile memory for temporary storage of data and/or instructions.

The computer readable instructions may have been pre-stored to the memory 920 or, alternatively or additionally, they may be received, by the apparatus, via an electromagnetic carrier signal and/or may be copied from a physical entity such as a computer program product. Execution of the computer readable instructions causes the apparatus 900 to perform one or more of the functionalities described above.

The memory 920 may be implemented using any suitable data storage technology, such as semiconductor-based memory devices, flash memory, magnetic memory devices and systems, optical memory devices and systems, fixed memory and/or removable memory. The memory may comprise a configuration database for storing configuration data, such as a current neighbour cell list, and, in some example embodiments, structures of frames used in the detected neighbour cells.

The apparatus 900 may further comprise or be connected to a communication interface 930, such as a radio unit, comprising hardware and/or software for realizing communication connectivity with one or more wireless communication devices according to one or more communication protocols. The communication interface 930 comprises at least one transmitter (Tx) and at least one receiver (Rx) that may be integrated to the apparatus 900 or that the apparatus 900 may be connected to. The communication interface 930 may provide means for performing some of the blocks for one or more example embodiments described above. The communication interface 930 may comprise one or more components, such as: power amplifier, digital front end (DFE), analog-to-digital converter (ADC), digital-to-analog converter (DAC), frequency converter, (de)modulator, and/or encoder/decoder circuitries, controlled by the corresponding controlling units.

The communication interface 930 provides the apparatus with radio communication capabilities to communicate in the wireless communication network. The communication interface may, for example, provide a radio interface to one or more wireless communication devices. The apparatus 900 may further comprise or be connected to another interface towards a core network such as the network coordinator apparatus or AMF, and/or to the access nodes of the cellular communication system.

The apparatus 900 may further comprise a scheduler 940 that is configured to allocate radio resources. The scheduler 940 may be configured along with the communication control circuitry 910 or it may be separately configured.

It is to be noted that the apparatus 900 may further comprise various components not illustrated in FIG. 9. The various components may be hardware components and/or software components.

As used in this application, the term "circuitry" may refer to one or more or all of the following: a) hardware-only circuit implementations (such as implementations in only analog and/or digital circuitry); and b) combinations of hardware circuits and software, such as (as applicable): i) a combination of analog and/or digital hardware circuit(s) with software/firmware and ii) any portions of hardware processor(s) with software (including digital signal processor(s), software, and memory(ies) that work together to cause an apparatus, such as a mobile phone, to perform various functions); and c) hardware circuit(s) and/or processor(s), such as a microprocessor(s) or a portion of a microprocessor(s), that requires software (for example firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The techniques and methods described herein may be implemented by various means. For example, these techniques may be implemented in hardware (one or more devices), firmware (one or more devices), software (one or more modules), or combinations thereof. For a hardware implementation, the apparatus(es) of example embodiments may be implemented within one or more application-specific integrated circuits (ASICs), digital signal processors (DSPs), digital signal processing devices (DSPDs), programmable logic devices (PLDs), field programmable gate arrays (FPGAs), graphics processing units (GPUs), processors, controllers, micro-controllers, microprocessors, other electronic units designed to perform the functions described herein, or a combination thereof. For firmware or software, the implementation can be carried out through modules of at least one chipset (for example procedures, functions, and so on) that perform the functions described herein. The software codes may be stored in a memory unit and executed by processors. The memory unit may be implemented within the processor or externally to the processor. In the latter case, it can be communicatively coupled to the processor via various means, as is known in the art. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

It will be obvious to a person skilled in the art that, as technology advances, the inventive concept may be implemented in various ways. The embodiments are not limited to the example embodiments described above, but may vary within the scope of the claims. Therefore, all words and expressions should be interpreted broadly, and they are intended to illustrate, not to restrict, the embodiments.

## Claims

1. An apparatus comprising:
means for obtaining measurement information comprising radio environment measurements associated with a user device;
means for obtaining capability information associated with the user device;
means for determining, based at least on the measurement information, the capability information and a beam directivity constraint, one or more sounding reference signal resource sets for the user device; and
means for transmitting, to the user device, a message indicative of at least a subset of the one or more sounding reference signal resource sets.

2. The apparatus according to claim 1, wherein the beam directivity constraint comprises at least a maximum permissible exposure limit,
wherein the one or more sounding reference signal resource sets are for positioning of the user device.

3. The apparatus according to any preceding claim, wherein the one or more sounding reference signal resource sets comprise at least: one or more beamforming codebooks, one or more transmit power values corresponding to the one or more beamforming codebooks, one or more thresholds or decision criteria associated with a characteristic indicative of spatial selectivity, one or more sounding reference signal bandwidth configurations corresponding to the one or more beamforming codebooks, and one or more positioning measurement metrics corresponding to the one or more beamforming codebooks.

4. The apparatus according to any preceding claim, further comprising:
means for determining a ranking of the one or more sounding reference signal resource sets, the one or more sounding reference signal resource sets comprising a plurality of sounding reference signal resource sets,
wherein the message comprises information indicative of the ranking.

5. The apparatus according to any preceding claim, further comprising:
means for determining, based on the beam directivity constraint, one or more criteria for selecting a sounding reference signal resource set from the message,
wherein the message comprises information indicative of the one or more criteria.

6. An apparatus comprising:
means for receiving, from a network node, a message indicative of one or more sounding reference signal resource sets, wherein the one or more sounding reference signal resource sets are based at least on measurement information associated with the apparatus, capability information associated with the apparatus, and a beam directivity constraint, the measurement information comprising radio environment measurements associated with the apparatus;
means for selecting a sounding reference signal resource set from the one or more sounding reference signal resource sets such that the beam directivity constraint is satisfied with the selected sounding reference signal resource set; and
means for transmitting, to the network node, one or more sounding reference signals based on the selected sounding reference signal resource set.

7. The apparatus according to claim 6, wherein the beam directivity constraint comprises at least a maximum permissible exposure limit,
wherein the sounding reference signal resource set is selected such that the maximum permissible exposure limit is not exceeded,
wherein the one or more sounding reference signals are transmitted to support positioning of the apparatus.

8. The apparatus according to any of claims 6-7, wherein the sounding reference signal resource set comprises at least: a beamforming codebook, a transmit power value corresponding to the beamforming codebook, one or more thresholds or decision criteria associated with a characteristic indicative of spatial selectivity, a sounding reference signal bandwidth configuration corresponding to the beamforming codebook, and one or more positioning measurement metrics corresponding to the beamforming codebook.

9. The apparatus according to any of claims 6-8, wherein the message comprises information indicative of a ranking of the one or more sounding reference signal resource sets, the one or more sounding reference signal resource sets comprising a plurality of sounding reference signal resource sets,
wherein the sounding reference signal resource set is selected based at least partly on the ranking.

10. The apparatus according to any of claims 6-9, further comprising:
means for optimizing one or more transmit beams to radiate an amount of power in one or more other directions than a direction associated with the beam directivity constraint such that the beam directivity constraint is satisfied, and such that a spatial direction toward the network node is maintained,
wherein the one or more sounding reference signals are transmitted to the network node via the one or more transmit beams.

11. The apparatus according to any of claims 6-10, wherein the one or more sounding reference signals are transmitted by adjusting a transmit power of the one or more sounding reference signals such that an expected received signal strength of the one or more sounding reference signals is above a threshold, and such that the beam directivity constraint is satisfied.

12. The apparatus according to any of claims 6-11, wherein the one or more sounding reference signals are transmitted by adjusting a bandwidth of the one or more sounding reference signals such that an expected received signal strength of the one or more sounding reference signals is above a threshold, and such that the beam directivity constraint is satisfied.

13. The apparatus according to any of claims 6-12, further comprising:
means for transmitting, to the network node, an indication indicating the selected sounding reference signal resource set.

14. A method comprising:
obtaining measurement information comprising radio environment measurements associated with a user device;
obtaining capability information associated with the user device;
determining, based at least on the measurement information, the capability information and a beam directivity constraint, one or more sounding reference signal resource sets for the user device; and
transmitting, to the user device, a message indicative of at least a subset of the one or more sounding reference signal resource sets.

15. A method comprising:
receiving, by an apparatus, from a network node, a message indicative of one or more sounding reference signal resource sets, wherein the one or more sounding reference signal resource sets are based at least on measurement information associated with the apparatus, capability information associated with the apparatus, and a beam directivity constraint, the measurement information comprising radio environment measurements associated with the apparatus;
selecting, by the apparatus, a sounding reference signal resource set from the one or more sounding reference signal resource sets such that the beam directivity constraint is satisfied with the selected sounding reference signal resource set; and
transmitting, by the apparatus, to the network node, one or more sounding reference signals based on the selected sounding reference signal resource set.
